# EUROPÄISCHE PATENTSCHRIFT

(11) **EP 3 607 358 B1**
(45) Veröffentlichungstag und Bekanntmachung des Hinweises auf die Patenterteilung: **04.01.2023**
(21) Anmeldenummer: 18713119.8
(22) Anmeldetag: 06.03.2018
(51) Int. Cl.: G01T 1/29

(54) **VERFAHREN UND VORRICHTUNG ZUR ZWEIDIMENSIONALEN BILDGEBUNG EINER POSITRONEN-EMITTER-VERTEILUNG VON SCHWACH POSITRONEN ABSORBIERENDEN OBJEKTEN**
METHOD AND SYSTEM FOR TWO DIMENSIONAL IMAGING OF POSITRON EMITTER DISTRIBUTION OF SLOW POSITRON ABSORBING OBJECTS
PROCÉDÉ ET DISPOSITIF POUR L'IMAGERIE BIDIMENSIONELLE D'UNE DISTRIBUTION DE POSITRONS ÄL'AIDE D'UN OBJET ABSORBANT DE POSITRONS LENTS

(30) Priorität: 06.04.2017 DE 102017003353
(43) Veröffentlichungstag der Anmeldung: 12.02.2020
(73) Patentinhaber: Forschungszentrum Jülich GmbH, 52425 Jülich (DE)
(72) Erfinder: SCHEINS, Jürgen, 52457 Aldenhoven (DE)
(86) Internationale Anmeldenummer: PCT/DE2018/000055
(87) Internationale Veröffentlichungsnummer: WO 2018/184610

(56) Entgegenhaltungen:
- DE-A1- 3 208 178
- HAMMER B E ET AL: "USE OF A MAGNETIC FIELD TO INCREASE THE SPATIAL RESOLUTION OF POSITRON EMISSION TOMOGRAPHY", MEDICAL PHYSICS, AIP, MELVILLE, NY, US, Bd. 21, Nr. 12, 1. Dezember 1994 (1994-12-01), Seiten 1917-1920, XP000496873, ISSN: 0094-2405, DOI: 10.1118/1.597178

## Beschreibung

Die Erfindung betrifft ein Verfahren und eine Vorrichtung zur zweidimensionalen Bildgebung einer Positronen-Emitter-Verteilung von schwach Positronen absorbierenden Objekten.

Der Stand der Technik wird bislang durch die Positronen-Emission-Tomographie [PET] als universelles 3-dimensionales Bildgebungsverfahren repräsentiert [1], welches insbesondere für die Quantifizierung von biologisch-dynamischen Stoffwechselprozessen (in vivo) einsetzbar ist. Vielfältige Anwendungsgebiete finden sich beispielsweise in der prä-klinischen Forschung, der Humanmedizin, den Neurowissenschaften sowie bei der Erforschung pflanzlicher Stoffwechselvorgänge. Hierfür existiert je nach Anwendungsfeld eine Vielzahl kommerzieller und nicht-kommerzieller PET-Scanner unterschiedlichster Bauart. Als neueste Entwicklung kommen auch MR/PET-Hybrid Detektorsysteme zum Einsatz [2], um eine optimale Synergie zwischen metabolischen Informationen mittels PET mit physikalisch-technisch bedingter geringerer räumlicher Auflösung (typischerweise 2 - 5 mm) sowie morphologischen bzw. strukturellen Informationen mittels Magnet-Resonanz-Tomographie [MRT] mit räumlich sehr guter Auflösung (typischerweise <1 mm) zu erzielen.

Des Weiteren gibt es das Verfahren der Positronen-Schwächungs-Tomographie, bei dem Untersuchungsobjekte bezüglich ihrer Positronen-Absorptionseigenschaften bzw. Positronen-Annihilationseigenschaften durch parallele Positronen-Strahlen einer wohldefinierten Positronenquelle charakterisiert werden können [3]. Hierzu ist ein homogenes, starkes Magnetfeld mit axialer Ausrichtung zum PET-Scanner erforderlich, so wie es im Allgemeinen für MR/PET-Hybrid Scanner der Fall ist.

Die genaue Quantifizierbarkeit der zugrunde liegenden Positronen-Emitter-Dichteverteilung eines Objekts durch die PET-Methodik setzt voraus, dass möglichst alle emittierten Positronen in unmittelbarer Umgebung des wahren Emissionsortes durch Annihilation in zwei in entgegengesetzte Richtung fliegende 511 keV Gamma-Quanten konvertieren und sodann durch ein PET-Scanner nachweisbar werden. Dabei wird ausgenutzt, dass die Gamma-Quanten nahezu ungehindert aus dem Untersuchungsobjekt gelangen können, während die Positronen in Materie nur äußerst geringe Distanzen zwischen Emissions- und Annihilationsort zurücklegen können. Die mittlere freie Weglänge der Positronen hängt stark von der Elektronen-Dichteverteilung der Umgebung ab sowie von der kinetischen Energie der emittierten Positronen, welche sich für verschiedene Isotope unterscheiden.

Aus diesem Wirkmechanismus ergeben sich für großflächige Objekte mit gleichzeitig geringem Volumen und/oder geringer Materiedichte relevant erhöhte Wahrscheinlichkeiten für das Entweichen von Positronen aus dem Untersuchungsobjekt, ohne einen entsprechenden Annihilationsvorgang auszulösen. Die Problematik ergibt sich beispielsweise bei dünnen Schnitten von biologischem Material oder biologischem Material einer geringen Dicke, beispielsweise Blätter oder Dünnschnitte von Organteilen, beispielsweise Gehirnen. Die entwichenen Positronen entziehen sich einem direkten Nachweis durch die PET-Methodik, so dass hier die Quantifizierung grundsätzlich zu einer systematischen Unterschätzung der wahren Positronen-Emitter-Dichteverteilungen führt. Eine Abschätzung der Entweichwahrscheinlichkeit der Positronen zur Korrektur der tomographisch rekonstruierten Positronen-Emitter-Dichteverteilung gestaltet sich schwierig, da diese sehr sensibel von der genauen Elektronendichteverteilung sowie der wahren Positronen-Emitter-Dichteverteilung des Untersuchungsobjekts abhängen. Beide Verteilungen lassen sich allerdings durch die begrenzte Auflösung der verfügbaren PET-Scanner im Allgemeinen nur unzureichend charakterisieren.

In der Offenlegungsschrift DE 32 08 178 A1 wird ein Positronen-Emissions-Tomograph zur Aufzeichnung der Ortsverteilung einer in einem zu untersuchenden Körper eingebrachten, Positronen anstrahlenden Substanz offenbart, bei der eine Einrichtung zum Erzeugen eines Magnetfeldes im Behandlungsraum vorhanden ist, das bewirkt, dass die Positronen zwischen ihrem Entstehungsort und dem Ort der Zerstrahlung im Magnetfeld eine spiralähnliche Bahn durchlaufen.

Die Schrift von HAMMER B. E, ET ALL: "USE OF A MAGNETIC FIELD TO INCREASE THE SPATIAL RESOLOUTION OF POSITRON EMISSION TOMOGRAPHY", MEDICAL PHYSICS , AIP, MELVILLE, NY, US; Bd, 21, Nr. 12, 1.Dezember 1994 (1994-12-01), Seiten 1917-1920, XP000496873, ISSN: 0094-2405, DOI: 10.1118/1.597178 offenbart ein Verfahren zur Positronen-Emissions-Tomographie, bei dem ein starkes Magnetfeld eingesetzt wird um die Positronen in einer transversalen Bewegung zu führen.

Es ist daher die Aufgabe der Erfindung ein Verfahren und eine Vorrichtung zur Verfügung zu stellen, mit denen eine zweidimensionale quantitative Dichteverteilung von Positronen-Emittern in Untersuchungsobjekten mit geringer Annihilationswahrscheinlichkeit der emittierten Positronen innerhalb des Untersuchungsobjekts ermöglicht wird. Dabei sollen die erhaltenen Bilder auch ohne tomographische Rekonstruktionsverfahren generiert werden können.

Für Untersuchungsobjekte mit geringer e⁺e⁻ Annihilationswahrscheinlichkeit innerhalb des Untersuchungsobjektes soll ein Verfahren zur Verfügung gestellt werden, welches eine gegenüber der PET-Methodik verbesserte Quantifizierung der Verteilung von Positronen-Emittern ermöglicht. Das Verfahren und die Vorrichtung sollen insbesondere für großflächige Objekte mit gleichzeitig geringem Volumen und/oder Objekte mit geringer Materiedichte einsetzbar sein und dabei genauere Ergebnisse für die Positronen-Emitter-Dichteverteilung des Untersuchungsobjekts liefern.

Ausgehend vom Oberbegriff des Anspruchs 1 und des nebengeordneten Anspruchs wird die Aufgabe erfindungsgemäß gelöst durch den kennzeichnenden Teil des Anspruchs 1 und des nebengeordneten Anspruchs.

Mit dem erfindungsgemäßen Verfahren und der Vorrichtung ist es nunmehr möglich, die zweidimensionale quantitative Dichteverteilung von Positronen-Emittern in Untersuchungsobjekten mit geringer Annihilationswahrscheinlichkeit der emittierten Positronen innerhalb des Untersuchungsobjekts zu messen. Dabei können die erhaltenen Bilder auch ohne tomographische Rekonstruktionsverfahren generiert werden. Für Untersuchungsobjekte mit geringer e⁺e⁻ Annihilationswahrscheinlichkeit innerhalb des Untersuchungsobjektes wird ein Verfahren zur Verfügung gestellt, welches eine gegenüber der PET-Methodik verbesserte Quantifizierung der Verteilung von Positronen-Emittern ermöglicht. Das Verfahren und die Vorrichtung liefern insbesondere für großflächige Objekte mit gleichzeitig geringem Volumen und/oder Objekte geringer Materiedichte Bilder mit erhöhter Genauigkeit der Positronen-Emitter-Dichteverteilung des Untersuchungsobjekts gegenüber dem eingangs genannten Verfahren.

Vorteilhafte Weiterbildungen der Erfindung sind in den Unteransprüchen angegeben.

Im Folgenden wird die Erfindung in ihrer allgemeinen Form beschrieben, ohne dass dies einschränkend auszulegen ist.

Für ein zu untersuchendes Objekt, insbesondere ein schwach Positronen absorbierendes Objekt, wird die Positronen-Emitter-Dichteverteilung in einem Objekt erfindungsgemäß als zweidimensionales Bild in Form einer Projektion erzeugt.

Als zu untersuchendes Objekt kann grundsätzlich jedes Objekt eingesetzt werden, jedoch insbesondere Untersuchungsobjekte mit geringer Annihilationswahrscheinlichkeit von emittierten Positronen innerhalb des Untersuchungsobjekts. Dies können insbesondere großflächige Objekte mit gleichzeitig geringem Volumen und/oder Objekte geringer Materiedichte sein, insbesondere biologisches Material, beispielsweise Blätter oder Dünnschnitte von Organteilen, beispielsweise Gehirnen.

Die Positronen-Emitter werden dem zu untersuchenden Objekt vor oder während der Messung zugefügt oder sie werden vor oder während der Messung aktiv aufgenommen, z.B. durch Stoffwechselprozesse. Als Positronen-Emitter können beispielsweise ¹⁸F, ¹⁵O, ¹¹C bzw. Verbindungen, die diese Nuklide enthalten, wie beispielsweise ¹¹CO₂ verwendet werden, die mit bekannten Methoden in das Objekt eingebracht werden können. Für den Fall, dass das zu untersuchende Objekt bereits in seinem natürlichen Zustand Positronen-Emitter beinhaltet, müssen diese nicht zusätzlich zugegeben werden.

Das für die Untersuchung eingesetzt Objekt enthält einen Positronen-Emitter.

Erfindungsgemäß wird ein Magnetfeld erzeugt. Vorzugsweise sind die Eigenschaften, insbesondere der Verlauf des Magnetfeldes bekannt oder können ermittelt werden.

Das Magnetfeld besitzt naturgemäß homogene und inhomogene Bereiche.

Im homogenen Bereich, d.h. im Bereich konstanter Feldstärke, verlaufen die Magnetfeldlinien parallel in eine bestimmte Richtung. Dem Fachmann ist der Begriff des homogenen Magnetfeldes bekannt.

Inhomogene Bereiche des Magnetfeldes, also Bereiche räumlich variierender Feldstärke, können Randbereiche des Magnetfeldes sein. Hier laufen die Magnetfeldlinien auseinander oder zueinander. Damit ist im Sinne der Erfindung der Magnetfeldbereich gemeint, unter dem der Fachmann kein homogenes Magnetfeld versteht.

Ein Magnetfeld kann durch eine Spule, beispielsweise durch einen Elektromagneten, aber auch durch einen Permanentmagneten erzeugt werden.

Die Magnetfeldstärke kann dabei grundsätzlich jeden Wert betragen beispielsweise in einem Bereich von 0,5 bis 21 Tesla liegen, insbesondere 3 bis 11 Tesla.

Erfindungsgemäß wird das zu untersuchende Objekt in ein Magnetfeld gebracht, so dass die aus dem Untersuchungsobjekt heraustretenden Positronen auf einer Spiralbahn entlang der Magnetfeldlinien verlaufen. Erfindungsgemäß wird ein Magnetfeld ausgenutzt, entlang dessen Feldlinien sich emittierte Positronen aufgrund der Lorentz-Kraft auf Spiralbahnen bewegen. Entsprechend lassen sich sowohl homogene Magnetfeldbereiche mit idealerweise parallel verlaufenden Feldlinien als auch inhomogene Feldbereiche, d.h. beispielsweise Randbereiche eines primär homogenen Feldes, ausnutzen und es ist dabei unerheblich, durch welche Vorrichtung das Magnetfeld erzeugt wird. Lediglich der Feldlinienverlauf muss bekannt sein oder ermittelt werden können. Sofern der Feldlinienverlauf bekannt ist, sind auch unmittelbar die Flugbahnen der emittierten Positronen bekannt und lassen sich dann eindeutig durch Extrapolation bis zum Emissionsort zurückverfolgen, was als Tracking-Methode bezeichnet wird. Diese ist dem Fachmann bekannt.

Je höher die Magnetfeldstärke ist, desto enger werden die Bahnen der Positronen entlang den Magnetfeldlinien, und desto schärfer wird das Bild, d.h. die sogenannten Gyro-Radien der Spiralbahnen verkleinern sich mit zunehmender Magnetfeldstärke in für die Erfindung günstiger Weise.

Das zu untersuchende Objekt kann im homogenen Bereich des Magnetfeldes aber auch im inhomogenen Bereich des Magnetfeldes angeordnet werden. Entscheidend ist nur, dass aus dem zu untersuchenden Objekt austretenden Positronen sich innerhalb des Magnetfeldes fortbewegen. Die aus dem Untersuchungsobjekt austretenden Positronen bewegen sich dann entlang der Magnetfeldlinien auf einer Spiralbahn.

Besonders bevorzugt wird ein flaches Untersuchungsobjekt auf dessen Oberfläche die Magnetfeldlinien möglichst senkrecht verlaufen. Es können jedoch auch Abweichungen von der genau senkrechten Anordnung vorhanden sein, die herausgerechnet werden können.

Erfindungsgemäß wird ein Positronenabsorber in dem Magnetfeld so positioniert, dass er die aus dem zu untersuchenden Objekt austretenden Positronen, die dem Magnetfeld folgen, absorbieren kann. Der Positronenabsorber wird dabei so positioniert, dass eine Vielzahl oder alle Punkte des Untersuchungsobjektes jeweils mit einer eindeutigen Feldlinie verknüpft sind und eine Vielzahl oder alle diese Feldlinien im weiteren Verlauf jeweils mindestens einen Schnittpunkt mit dem Positronenabsorber aufweisen. Auf diese Weise lassen sich eine Vielzahl oder alle Punkte auf dem Positronenabsorber eindeutig mit Punkten des Objektes verbinden und entsprechend der Tracking-Methode bei bekanntem Magnet-Feldlinienverlauf zuordnen.

Als Positronenabsorber kann jeder physische Körper eingesetzt werden, welches mit Positronen derart wechselwirkt, dass der Ort der Wechselwirkung bestimmt werden kann, so dass eine Lokalisation des Auftreffpunktes des Positrons auf dem Positronenabsorber ermöglicht wird.

In einer Ausführungsform ist der Positronenabsorber eine Speicherplatte, welche am Auftreffpunkt bei der Wechselwirkung mit einem Positron die Ortsinformation des Auftreffpunktes als Zustandsänderung speichert und sich beispielsweise verfärbt. Dabei kann als Speicherplatte beispielsweise eine Photoplatte, eine Kristallmatrix oder eine beispielsweise mit Europium-Atomen beschichtete Platte zur direkten Detektion der Positronen nach dem Prinzip des Phosphor-Imaging eingesetzt werden. Beim Phosphor-Imaging erfolgt die Lokalisierung der Positronenauftreffpunkte unabhängig vom e⁺e⁻ Annihilationsvorgang und der dabei emittierten γ-Quanten. Über die Zeit erfolgt dabei eine Integration der Zustandsänderung der auf der Speicherplatte auftreffenden Positronen.

In einer anderen Ausführungsform kann als Positronenabsorber ein Positronenabsorptionsschirm verwendet werden, der die aus dem Untersuchungsobjekt ausgetretenen Positronen absorbiert und diese dort mit jeweils einem Elektron annihilieren. Das führt zur Emission zweier 511 keV γ-Quanten, die von einem PET-Gerät registriert werden. Unter einem Positronenabsorptionsschirm im Sinne der Erfindung wird ein Schirm verstanden, welcher Positronen absorbiert und diese jeweils mit einen Elektron annihilieren. Im Folgenden wird für diese Art von Positronenabsorber der Begriff Positronenabsorptionsschirm ohne den erläuternden Zusatz verwendet. Damit kann aus den entstehenden LOR's (line of response) eine zweidimensionale Projektion der Positronen auf dem Positronenabsorptionsschirm generiert werden. Das kann ohne die Notwendigkeit von tomographischen Rekonstruktionsverfahren geschehen.

Der Absorptionsschirm kann grundsätzlich aus jedem Material bestehen, da es nur auf die e⁺e⁻ Annihilation ankommt, die grundsätzlich in jedem Material stattfinden kann. Als besonders geeignet hat sich Aluminium, Titan, Kupfer, Gold, Glas, Kunststoff sowie Plexiglas herausgestellt. Die aus dem Positronenabsorptionsschirm austretenden γ-Strahlen können dann von einem PET-Gerät detektiert werden.

Aus dem Objekt emittierte Positronen bewegen sich nunmehr entlang der vorhandenen Magnet-Feldlinien auf Spiralbahnen, so dass die Positronen schließlich auf mindestens einen bestimmten Punkt des Positronenabsorptionsschirms, im folgenden Auftreffpunkt genannt, treffen und dort gezielt mit einem Elektron annihilieren können. Bei jedem stattfindenden Annihilationsprozess entstehen genau zwei 511 keV Gamma-Quanten, die in entgegengesetzte Richtung auseinander fliegen. Jedes entstandene Gamma-Quanten-Paar definiert somit eine eindeutige Signallinie im 3-dimensionalen Raum, im folgenden Signallinie genannt, unabhängig von der Trajektorie des verursachenden Positrons und unabhängig von der Magnetfeldrichtung und kann durch eine Messvorrichtung, die jeweils beide Gamma-Quanten detektiert, ermittelt werden. Als Messvorrichtung eignet sich jeder herkömmliche Positronen-Emissions-Tomograph, wobei die genaue Ausführung der Messvorrichtung für das erfindungsgemäße Verfahren unerheblich ist. Jede detektierte Signallinie hat mindestens oder genau einen Schnittpunkt mit dem Positronenabsorptionsschirm, der durch geometrische Interpolation berechnet werden kann und den jeweiligen Auftreffpunkt markiert. Jeder Positronen-Auftreffpunkt kann schließlich durch die Tracking-Methode einem direkten Emissionsort als 2-dimensionale Projektion innerhalb des Objektes zugeordnet werden. Daraus ergibt sich unmittelbar eine 2-dimensionale Positron-Emitter-Dichteverteilung ohne die Notwendigkeit zur Anwendung eines tomographischen Rekonstruktionsverfahrens.

Weiterhin können an Stelle eines einzigen Positronenabsorptionsschirmes auch mindestens zwei Positronenabsorptionsschirme treten, die nacheinander angeordnet sind. Diese sollen eine geringere Schichtdicke aufweisen als ein einziger Positronenabsorptionsschirm. Dafür kommen beispielsweise Folien, wie Aluminiumfolien oder Goldfolien in Betracht.

In einer anderen Ausführungsform kann der Positronenabsorber ein elektronischer Detektor sein. Der elektronische Detektor kann als ortsauflösender Detektor die Ortsinformation der gemessenen Signale, die durch Auftreffen der Positronen entstehen, auf Grund der ionisierenden Wirkung des Positrons registrieren. Hierfür kommen beispielsweise Phoswich Detektoren in Betracht, die zusätzlich mit Szintillatormaterialien, beispielsweise Plasik-Szintillatoren, in Kombination mit klassischen PET-Photodetektoren verwendet werden können.

Der Positronenabsorber ist vorzugsweise planar. Er kann aber auch andere Geometrien aufweisen, beispielsweise Formen von Hohlkörpern.

In einer Ausführungsform wird der Positronenabsorber in den im Wesentlichen homogenen Teil des Magnetfeldes positioniert. Das hat den Vorteil, dass unmittelbar ein Bild einer 1:1 Projektion entsteht, wenn sich das zu untersuchende Objekt ebenfalls im homogenen Teil des Magnetfeldes befindet.

Alternativ kann der Positronenabsorber jedoch auch in den inhomogenen Teil, beispielsweise den divergierenden Bereich des Magnetfeldes, gestellt werden. Das hat zur Folge, dass die Positronen, im divergierenden Bereich des Magnetfeldes voneinander getrennt werden, und eine vergrößerte Projektion des abzubildenden Untersuchungsobjektes generieren, so dass in dem entstehenden Bild eine größere Bildgenauigkeit auf Grund einer Vergrößerung resultiert. Dies ist insbesondere bei der Verwendung von Positronenabsorptionsschirmen in Verbindung mit PET-Geräten vorteilhaft, da die begrenzte Auflösung der LOR Messung bei der Messung der γ-Strahlung durch die Aufweitung der Abstände eine höhere Trennschärfe erzielt.

Der Aufbau ist dabei der Gestalt, dass sich der Positronenabsorber gegenüber dem Untersuchungsobjekt befindet und sich dazwischen mindestens ein Teilbereich des Magnetfeldes befindet. Vorzugsweise ist der Positronenabsorber parallel zur Oberfläche des Untersuchungsobjektes ausgerichtet. Er kann aber auch zu der Oberfläche des zu untersuchenden Objekts geneigt sein.

Weiterhin ist es möglich, dass ein zu untersuchendes Objekt zwischen zwei Positronenabsorbern angeordnet ist, so dass das Objekt mit den jeweiligen Positronenabsorbern zwei Hemisphären bildet, in die Positronen emittiert werden können, wobei von beiden Seiten des zu untersuchenden Objekts Bilder aufgenommen werden können. Bei Inhomogenität des zu untersuchenden Objektes kann dies dazu führen, dass die Positronenabsorber, die sich in den verschiedenen Hemisphären befinden, unterschiedliche Bilder der Verteilung der Positronen-Emitter im zu untersuchenden Objekt registrieren.

In einer weiteren Ausführungsform kann zwischen dem Untersuchungsobjekt und dem Positronenabsorptionsschirm ein weiterer Positronenabsorptionsschirm mit Öffnungen angeordnet sein, der als Maske fungiert, und durch den ein Teil des Positronenstroms geleitet wird und der seinerseits in seinen festen Bestandteilen e⁺e⁻ annihilierend wirkt. Das hat zur Folge, dass die Auflösung des Bildes durch die Methode der Super-Resolution verbessert werden kann. Zusätzlich kann durch eine kontrollierte relative Verschiebung von Objekt zu Positronenabsorptionsschirm, d.h. Messung in mehreren verschiedenen Stellungen, eine weitere Verbesserung der Bildauflösung mittels Super-Resolution-Verfahren erzielt werden. Dabei werden das zu untersuchende Objekt und der Positronenabsorptionsschirm auf parallel zueinander angeordneten Ebenen, die senkrecht oder im Wesentlichen senkrecht zum magnetischen Feld stehen, gegeneinander verschoben. Vorzugsweise wird dabei das Objekt verschoben. Die Verschiebung des Objekts erfolgt dabei horizontal und/oder vertikal bezogen auf die Ebene, die das Objekt bei gleichbleibendem Abstand zum Positronenabsorptionsschirm einnimmt. In einer einfacheren Ausführungsform kann ein Super-Resolution-Verfahren auch ohne eine Verschiebung des Objekts relativ zum Positronenabsorptionsschirm durchgeführt werden. Das Verfahren der Super-Resolution ist dem Fachmann bekannt.

Bei allen Ausführungsformen können auch zeitlich aufeinanderfolgende Aufnahmen durchgeführt werden, so dass die zeitliche Veränderung der Positronendichteverteilung aufgenommen werden kann. Es kann dann eine dynamische Veränderung gemessen werden.

Das Verfahren kann auch bei einem gegenüber dem Atmosphärendruck reduzierten Druck oder im Vakuum durchgeführt werden. Das hat den Vorteil, dass auf der Wegstrecke zum Positronenabsorber weniger Positronen annihilieren.

Für die Durchführung des erfindungsgemäßen Verfahrens wird eine Vorrichtung zur Verfügung gestellt, die aus einer Anordnung eines Positronenabsorbers und eines Magneten besteht. Das zu untersuchende Objekt und der Positronenabsorber befinden sich dabei in dem bekannten oder ermittelbaren Magnetfeld des Magneten.

Der Magnet kann ein Permanentmagnet oder eine Spule sein, die mit Strom versorgt wird.

Bei dem Positronenabsorber kann es sich um eine Speicherplatte handeln, welche am Auftreffpunkt bei der Wechselwirkung mit einem Positron die Ortsinformation des Auftreffpunktes durch Zustandsänderung speichert und sich beispielsweise verfärbt. Dabei kann als Speicherplatte beispielsweise eine Photoplatte, eine Kristallmatrix oder eine beispielsweise mit Europium-Atomen beschichtete Platte zur direkten Detektion der Positronen nach dem Prinzip des Phosphor-Imaging eingesetzt werden. Beim Phosphor-Imaging erfolgt die Lokalisierung der Positronenauftreffpunkte unabhängig vom e⁺e⁻ Annihilationsvorgang und der dabei emittierten γ-Quanten. Über die Zeit erfolgt dabei eine Integration der Zustandsänderung der Speicherplatte auftreffenden Positronen.

Als Positronenabsorber kommt auch ein elektronischer Detektor in Betracht. Der elektronische Detektor kann die Ortsinformation der gemessenen Signale, die durch Auftreffen der Positronen entstehen, auf Grund der ionisierenden Wirkung der Positronen registrieren. Hierfür kommen beispielsweise Phoswich Detektoren in Betracht, die zusätzlich mit Szintillatormaterialien, beispielsweise Plastik-Szintillatoren, in Kombination mit klassischen PET-Photodetektoren verwendet werden können.

Als Positronenabsorber kann auch ein Positronenabsorptionsschirm oder eine Positronenabsorptionsplatte dienen, welche Positronen absorbiert und diese jeweils mit einem Elektron annihilieren, wobei zwei 511 keV γ-Quanten entstehen.

Zur Registrierung der 511 keV γ-Quanten dient ein PET Gerät, welches so angeordnet ist, dass es die γ-Quanten detektieren kann.

Der Positronenabsorptionsschirm oder die Positronenabsorptionsplatte kann aus Metallen, wie Aluminium, Titan, Kupfer, Gold aber auch anderen Materialien, wie Kunststoff, Glas oder Plexiglas bestehen, ohne dass die Nennung dieser Materialien einschränkend ist.

Es können mindestens zwei Positronenabsorptionsschirme oder Positronenabsorptionsplatten in Bezug auf das zu untersuchende Objekt hintereinander angeordnet sein.

In einer Ausführungsform kann das zu untersuchende Objekt zwischen zwei Positronenabsorbern positioniert sein, so dass beide Seiten des Objekts abgebildet werden können.

Die Dicke der Positronenabsorptionsschirme oder Positronenabsorptionsplatten können beispielsweise zwischen 0,1 und 10 mm liegen. Die gewählte Dicke kann von Material zu Material variieren.

Zwischen dem zu untersuchenden Objekt und dem Positronenabsorptionsschirm kann eine Maske mit Öffnungen angebracht sein.

Im Folgenden wird die Erfindung an Hand von Figuren dargestellt, ohne dass dies einschränkend auszulegen ist.

Es zeigt:
Fig.1: Eine erfindungsgemäße Vorrichtung
Fig.2: Vergleichende Aufnahmen mit dem erfindungsgemäßem Verfahren

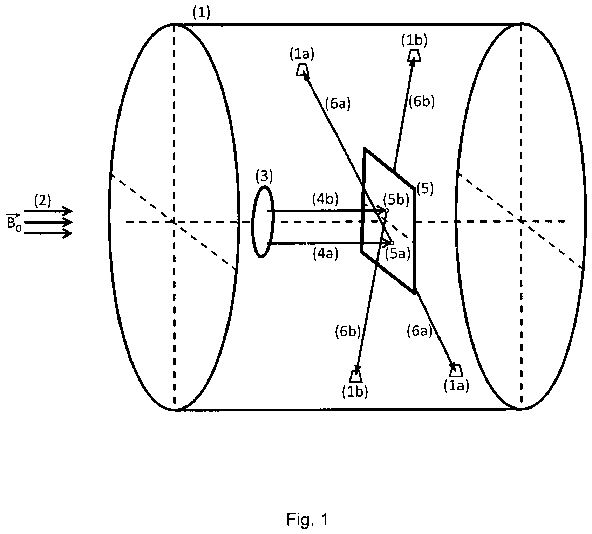

In Figur 1 ist eine Vorrichtung zur Durchführung des erfindungsgemäßen Verfahrens dargestellt. In ihr bezeichnet das Bezugszeichen 1 ein PET Detektorsystem mit PET Photodetektoren 1a, 1b. Auf der linken Seite ist das Magnetfeld B₀ mit Bezugszeichen 2 dargestellt, welches sich in das PET Detektorsystem 1 erstreckt. In dem Magnetfeld 2 befindet sich das zu untersuchende Objekt 3. Von dem zu untersuchenden Objekt 3 gehen emittierte Positronen 4a, 4b aus, welche auf den Positronenabsorptionsschirm 5 treffen. Die Auftreffpunkte der Positronen auf dem Positronenabsorptionsschirm 5 haben die Bezugszeichen 5a und 5b. Von den Auftreffpunkten 5a, 5b gehen Gamma-Quantenpaare 6a, 6b aus, welche auf die PET Photodetektoren 1a und 1b treffen.

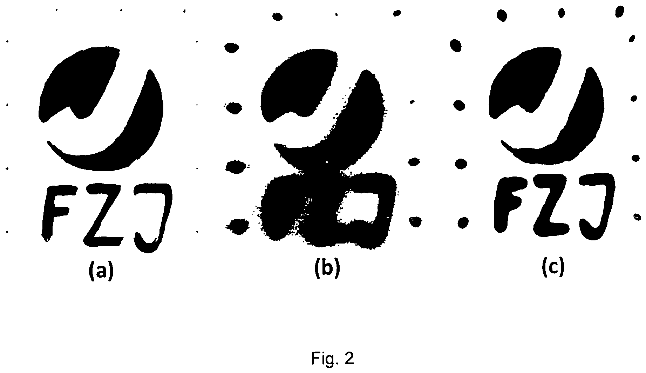

Figur 2 zeigt 2D-Bilder zur Positronen-Dichteverteilung mit den Teilfiguren a) b) und c).

In Teilfigur a) ist ein Bild dargestellt, welches sowohl farblich gekennzeichnet ist als auch über seine gesamte Fläche der farblichen Kennzeichnung mit einem ¹⁸F-Marker als Positronenmitter beaufschlagt ist, der die gleichen Flächen und Umrisse abbildet, wie die farbliche Kennzeichnung.

Teilfigur b) zeigt ein berechnetes Bild des erfindungsgemäßen Verfahrens durch Interpolation der mit dem PET-Detektorsystem gemessenen LORs auf einem planaren Absorptionsschirm bei Verwendung der Positronen-Emitter-Verteilung gemäß Teilfigur a).

In Teilfigur c) ist eine tomographische Rekonstruktion der mit dem PET-Detektorsystem 1 gemessenen Gamma-Quantenpaare dargestellt, die am Positronenabsorptionsschirm 5 am Ort der Auftreffpunkte 5a, 5b entstanden sind, bei Verwendung der Positronen-Emitter-Verteilung gemäß Teilfigur a) gemessen wurden.

### Beispiel:

Im Folgenden wird die Erfindung beispielhaft erläutert, ohne dass dies einschränkend auszulegen ist.

Ausgenutzt wird der Effekt, dass entweichende Positronen bei Vorhandensein eines Magnetfeldes durch die dann wirkende Lorentz-Kraft F = q (v x B) (auf die positiv geladenen Positronen) auf eine Spiralbahn mit einem bestimmten Gyro-Radius R entlang der Magnetfeldlinien gezwungen werden. Der Gyro-Radius ist abhängig von der Feldstärke des Magnetfeldes, sowie vom Impuls des Positrons relativ zur Orientierung des Magnetfeldes, d.h. von Emissionsrichtung und Fluggeschwindigkeit. Beispielsweise ergibt sich für das Isotope 18F und einer Magnetfeldstärke von 3 Tesla ein mittlerer Gyro-Radius von 0.5 mm. Im Falle eines homogenen Magnetfeldes (B0-Feld) bewegen sich danach alle Positronen parallel zum B0-Feldvektor von ihrem Emissionsort fort, so dass (räumlich getrennt vom Untersuchungsobjekt) lokalisierte Positronen (in 3-dimensionalen Koordinaten) eine direkte Information über ihren Emissionsort in einer Ebene senkrecht zum B0-Feldvektor als 2-dimensionale Projektion enthalten. Durch Lokalisation entsprechend vieler Positronen in Form 3-dimensionaler Koordinaten (x,y,z) ergeben sich dann unmittelbar 2-dimensinonale Positronen-Emitter-Dichteverteilungen durch Projektion der ermittelten Koordinaten auf eine Ebene senkrecht zum B0-Feldvektor. Ohne das Vorhandensein eines Magnetfeldes würden Positronen vom jeweiligen Emissionsort isotrop in alle Richtung emittiert und enthielten keinerlei Richtungsinformation, so dass keine "Rückverfolgung" durch Extrapolation des jeweiligen Positrons auf den Austrittsortes aus dem Untersuchungsobjekt möglich wäre.

Zur Lokalisation der Positronen in Form 3-dimensionaler Koordinaten (x,y,z) dient ein konventioneller Positron-Emission-Tomograph (PET-Positronenabsorbersystem) welcher sich in einem homogenen Magnetfeld mit axialer Ausrichtung entlang der zentralen PET-Positronenabsorberachse befindet (Figur 1). Als wesentlichster Bestandteil der Erfindung wird eine planare, dünne Oberfläche ("Absorptionsschirm", engl. screen) mit möglichst hoher Positronen-Absorptionswahrscheinlichkeit (d.h. maximaler Elektronendichte bzw. minimaler Eindringtiefe der Positronen) zur wohldefinierten Erzwingung des Annihilationsprozesses in das zentrale Messfeld des PET-Detektors gebracht. Anschließend lassen sich die aus dem Annihilationsprozess entstehenden Paare von 511 keV Gamma-Quanten durch den PET-Scanner als Koinzidenzen registrieren. Jede gemessene Koinzidenz entspricht einer eindeutigen Signallinie, die sich aus den Koordinaten der jeweils angesprochenen (Photo)-Detektoren ableitet (Figur 1). Schließlich ergibt der mathematische Schnittpunkt jeder registrierten Signallinie mit der Ebene des Absorptionsschirms einen Auftreffpunkt des jeweils verursachenden Positrons als 3-dimensionale Koordinaten (x,y,z), wobei die gefundenen Koordinatenpaare (x,y) in der transaxialen Ebene eine 2-dimensionale Projektion der Positronen-Emitter-Dichteverteilung ergibt, welche aus dem Untersuchungsobjekt entwichen sind; daraus resultiert nach erfolgter Korrektur der geometrischen Akzeptanz und der Detektorreffizienzen eine quantitative 2-dimensionale Positronen-Emitter-Dichteverteilung aller entwichener Positronen, die in die Hemisphäre emittiert werden, welche den Absorptionschirm enthält. Dabei ist es unerheblich, ob sich das Untersuchungsobjekt innerhalb oder außerhalb des Messfeldes des Positron-Emissions-Tomographen befindet.

Sollen die entweichenden Positronen in beiden Hemisphären erfasst werden, so sind entsprechend zwei Absorptionsschirme zu verwenden, wobei sich das Untersuchungsobjekt dann zwischen den beiden Absorptionsschirmen befinden muss.

Desweiteren lassen sich mit diesem Verfahren auch dynamische Stoffwechselprozesse, d.h. zeitliche Veränderungen der Positronen-Emitter-Dichteverteilung, beobachten, indem die auf dem Absorptionsschirm (bzw. beiden Absorptionsschirmen) registrierten Koinzidenzen in ihrer zeitlichen Abfolge, exklusiv für verschiedene Messzeit-Intervalle als 2-dimensionale Projektionen dargestellt werden.

Als erweiterte Ausführung der Messanordnung kann zwischen Absorptionsschirm und Untersuchungsobjekt eine Maske, d.h. ein mit regelmäßigen Öffnungen versehener zusätzlicher Absorptionsschirm, gesetzt werden. In diesem Fall treffen Positronen teilweise auf den zusätzlichen Masken-Absorptionsschirm (Sekundär-Schirm) auf und werden dort mittels der entstehenden Paare von Annihilations-Gammaquanten lokalisiert; der andere Teil fliegt durch die Öffnungen des Masken-Absorptionsschirms hindurch und lässt sich auf dem geschlossenen, ursprünglichen Absorptionsschirm (Primär-Schirm) lokalisieren. Auf diese Weise lassen sich komplementäre Informationen gewinnen, welche für das allgemeine Verfahren der Super-Resolution ausgenutzt werden können. Dabei handelt es sich um ein bekanntes Verfahren, bei dem die Auflösung eines Bildes gegenüber der durch den PET-Detektor bedingten maximal erreichbaren Auflösung verbessert werden kann. Zusätzliche Messungen des Untersuchungsobjektes in verschiedenen Positionen relativ zum Sekundär-Schirm können im Rahmen des Super-Resolution-Verfahrens zur weiteren Erhöhung der Bildauflösung beitragen. Durch die spezielle Kombination von Sekundär-Schirm und Primär-Schirm gehen keine Positronen durch die Maskierung verloren, d.h. die Maskierung kann ohne Verlust der Sensitivität erfolgen. Letztlich kann durch Super-Resolution-Verfahren eine Auflösung erreicht werden, die besser ist, als die durch den Positronen-Emissions-Tomographen festliegende Obergrenze ohne "Super-Resolution".

In einer anderen Ausführung der Messanordnung kann der Positronen-Emissions-Tomograph so positioniert werden, dass er sich nicht mehr im homogenen Bereich des Magnetfeldes befindet, sondern im Randbereich des Magnetfeldes, wo die Feldlinien bereits divergieren und entsprechend nach außen verlaufen. Wenn nun das Untersuchungsobjekt in einem Bereich höherer Feldstärke liegt, bewegen sich die Positronen entlang der Feldlinien auf nach außen gekrümmten Bahnen anstatt auf parallelen Bahnen, bevor sie auf den Absorptionsschirm treffen. Durch diese Aufweitung treffen Positronen von zwei benachbarten Emissionsorten auf den Absorptionsschirm in einer dazu vergrößerten Distanz, so dass eine bessere Trennung der Orte erfolgt. Auf diese Weise kann ein Vergrößerungs- bzw. Linsen-Effekt erzielt werden, der eine generelle Verbesserung der Bildauflösung bedeutet.

Als Messgerät zur Ermittlung einer der Erfindung gemäßen 2-dimensionalen Positronen-Emitter-Dichteverteilung kann jeder herkömmliche Positronen-Emissions-Tomograph verwendet werden, sofern dieser in starken Magnetfeldern betrieben werden kann. Dies trifft mittlerweile auf alle kommerziellen MR/PET-Hybrid Positronenabsorbersysteme zu. Dabei kann der PET-Positronenabsorber im jeweiligen Standard-Akquisitionsmodus betrieben werden ohne Erfordernis/Verwendung von Flugzeitinformationen der Gamma-QuantenPaare, welche durch die modernsten PET-Detektoren ergänzend zur Verfügung gestellt werden können. Daher stellen MR/PET-Hybrid PET-Detektoren die wesentliche Infrastruktur bereit, nämlich Positron-Emissions-Tomograph & starkes Magnetfeld, um die der Erfindung zugrunde liegende Methode realisieren zu können. Die Methode ist jedoch nicht auf diese Gerätekombination beschränkt. Als einzige und sehr einfach zu bewerkstelligende Modifikation muss ein Absorptionsschirm, z.B. eine dünne Aluminiumplatte, im zentralen Messfeld des PET-Detektorsystems positioniert werden (Figur 1), so dass auf dem Absorptionsschirm entstehende Gamma-Quantenpaare gemessen werden können. Zur Auswertung und Generierung der 2-dimenionalen Projektionen müssen lediglich die registrierten Signallinien auf entsprechende Schnittpunkte mit dem Absorptionsschirm interpoliert werden (Signallinien-Interpolation) (Figur 2 b)). Alternativ ist auch eine tomographische Rekonstruktion der Verteilung auf dem Absorptionsschirm möglich (Figur 2 c)). Befindet sich außerdem das Untersuchungsobjekt irgendwo im zentralen Messfeld des PET-Detektorsystems so kann auch hierfür durch tomographische Rekonstruktion ein Primär-Bild des Untersuchungsobjektes (räumlich getrennt vom "Absorptionschirm-Bild", d.h. Sekundär-Bild) erzeugt werden. Das 3-dimensionale Primär-Bild des Untersuchungsobjektes repräsentiert quantitative Werte der im Objekt absorbierten Positronen, während das 2-dimensionale Sekundär-Bild, entweder durch tomographische Rekonstruktion oder durch Signallinien-Interpolation generiert, eine Quantifizierung aller aus dem Untersuchungsobjekt entwichenen Positronen ermöglicht. In der Summe beider Verteilungen ergibt sich dann eine vollständige Quantifizierung der Positronen-Emitter-Dichteverteilung des Objektes. Je nach Beschaffenheit des Untersuchungsobjektes, d.h. wenn die 2-dimensionalen Positronen-Emitter-Dichteverteilungen für beide Hemisphären unterschiedlich sind, müssen 2 Absorptionsschirme verwendet werden, mit dem Untersuchungsobjekt dazwischen, um eine vollständige Quantifizierung zu erreichen.

Die korrekte Funktionsweise der erfindungsgemäßen Methode konnte bereits auf dem 3T TimTrio MR/BrainPET Scanner der Firma Siemens demonstriert werden; dabei handelt es sich um ein PET/MR-Hybrid Detektorsystem, welches bei einer Magnetfeldstärke von 3 Tesla arbeitet.

Als mögliche Anwendung lassen sich mit der neuen Methode die Stoffwechselprozesse in Pflanzenblättern flexibler und genauer quantifizieren. Die Pflanzenblätter lassen sich auf diese Weise berührungslos und dynamisch messen, was bei existierenden Messmethoden in dieser Form nicht möglich ist. Insbesondere die typischen dünnschichtigen Blattstrukturen zeigen einen signifikanten Anteil entweichender Positronen, welche durch die neue Methode erfasst und quantifiziert werden können.

### Zitierter Stand der Technik:

[1] Positron Emission Tomography: Basic Sciences, edited by D.L. Bailey, D.W. Townsend, P.E. Valk, M.N. Maisey, Springer, 2005, ISBN 1852337982
[2] S. Vandenberghe, P.K. Marsden, PET-MRI: a review of challenges and solutions in the development of integrated multimodality imaging,Physics in Medicine and Biology, 2015, Vol.60, No.4Feb 21;60(4):R115-54
[3] C.C. Watson, Positron Attenuation Tomography, US patent 20160116614 A1

## Patentansprüche

1. Verfahren zur zweidimensionalen Bildgebung einer Positronen-Emitter-Verteilung in zu untersuchenden Objekten, bei dem das zu untersuchende Objekt einen Positronenemitter beinhaltet,
wobei das die Positronenemitter enthaltende zu untersuchende Objekt (3) in einem Magnetfeld (2) positioniert wird, **dadurch gekennzeichnet, dass**
die das zu untersuchende Objekt (3) verlassenden Positronen (4a, 4b) dem Verlauf des Magnetfeldes (2) folgen und auf einen Positronenabsorbtionsschirm (5) treffen, welcher ebenfalls im Magnetfeld (2) positioniert ist und welcher bei der Wechselwirkung mit den Positronen (4a, 4b) eine Lokalisation der Auftreffpunkte (5a, 5b) der Positronen (4a, 4b) auf dem Positronenabsorbtionsschirm (5) ermöglicht.

2. Verfahren nach Anspruch 1,
**dadurch gekennzeichnet,**
**dass** ein planarer Positronenabsorbtionsschirm (5) oder ein Positronenabsorbtionsschirm (5) einer anderen Geometrie, beispielsweise in Formen eines Hohlkörpers eingesetzt wird.

3. Verfahren nach Anspruch 1 oder 2,
**dadurch gekennzeichnet,**
**dass** die Lokalisation des Auftreffpunktes (5a, 5b) durch Speicherung der Ortsinformation als Zustandsänderung der Auftreffpunkte (5a, 5b) der Positronen auf einer Speicherplatte durchgeführt wird.

4. Verfahren nach Anspruch 1 oder 2,
**dadurch gekennzeichnet,**
**dass** als Positronenabsorbtionsschirm (5) ein ortsauflösender elektronischer Detektor zum direkten Nachweis von Positronen (4a, 4b) durch Ionisation eingesetzt wird.

5. Verfahren nach Anspruch 1 oder 2,
**dadurch gekennzeichnet,**
**dass** ein Positronenabsorbtionsschirm (5) eingesetzt wird, welcher aus einem Material besteht, welches die Positronen (4a, 4b) absorbiert und diese mit jeweils einem Elektron annihilieren, wobei jeweils zwei 511 keV γ-Quanten entstehen, die von einem PET-Gerät registriert werden.

6. Verfahren nach Anspruch 5,
**dadurch gekennzeichnet,**
**dass** ein Positronenabsorptionsschirm (5) bzw. eine Positronenabsorptionsplatte aus Aluminium, Titan, Kupfer, Gold, Glas, Kunststoff oder Plexiglas eingesetzt wird.

7. Verfahren nach einem der Ansprüche 5 oder 6,
**dadurch gekennzeichnet,**
**dass** mindestens zwei Positronenabsorptionsschirme (5) in Bezug auf die Eintrittsebene der Positronen (4a, 4b) hintereinander angeordnet werden.

8. Verfahren nach Anspruch 7,
**dadurch gekennzeichnet,**
**dass** mindestens ein Positronenabsorptionsschirm (5) eingesetzt wird, der die Gestalt einer Maske mit Öffnungen besitzt.

9. Verfahren nach einem der Ansprüche 5 bis 8,
**dadurch gekennzeichnet,**
**dass** ein Positronenabsorptionsschirm (5) einer Dicke zwischen 0,1 mm und 10 mm eingesetzt wird,

10. Verfahren nach Anspruch 8 oder 9,
**dadurch gekennzeichnet,**
**dass** ein Super Resolution Verfahren angewendet wird.

11. Verfahren nach Anspruch 10,
**dadurch gekennzeichnet,**
**dass** das zu untersuchende Objekt und Positronenabsorptionsschirm relativ zueinander verschoben wird.

12. Verfahren nach einem der Ansprüche 1 bis 11,
**dadurch gekennzeichnet,**
**dass** das zu untersuchende Objekt (3) zwischen zwei Positronenabsorbtionsschirmen (5) positioniert wird und Bilder von beiden Seiten des zu untersuchenden Objekts (3) aufgenommen werden.

13. Verfahren nach einem der Ansprüche 1 bis 12,
**dadurch gekennzeichnet,**
**dass** der Positronenabsorbtionsschirm (5) im inhomogenen Bereich des Magnetfeldes (2) positioniert wird.

14. Verfahren nach einem der Ansprüche 1 bis 14,
**dadurch gekennzeichnet,**
**dass** das zu untersuchende Objekt (3) im homogenen Bereich des Magnetfeldes (2) positioniert wird.

15. Vorrichtung zur Durchführung des Verfahrens nach einem der Ansprüche 1 bis 14 umfassend
- einen Positronen-Emitter in einem zu untersuchenden Objekt (3),
- einen Positronenabsorber (5)
- einen Magneten, dazu eingerichtet, ein Magnetfeld (2) zu erzeugen,
wobei der Positronenabsorber (5) im Magnetfeld (2) des Magneten positioniert, der Positronenabsorber (5) eine Komponente aus der Gruppe
a) Speicherplatte, welche die Ortsinformation über die Auftreffpunkte der Positronen durch Zustandsänderung auf der Speicherplatte speichert,
b) elektronischer Detektor,
c) Positronenabsorptionsschirm (5), welcher Positronen absorbiert und diese jeweils mit einem Elektron annihilieren ist und die Vorrichtung dazu geeignet ist, eine zweidimensionale Bildgebung der Positronen-Emitter-Verteilung zu erzeugen, nach dem Verfahren nach einem der Ansprüche 1 bis 14.

16. Vorrichtung nach Anspruch 15,
**dadurch gekennzeichnet,**
**dass** die Speicherplatte nach Variante a) eine Photoplatte, eine Kristallmatrix oder eine mit Europiumatomen beschichtete Platte ist.

17. Vorrichtung nach Anspruch 15,
**dadurch gekennzeichnet,**
**dass** einem Positronenabsorptionsschirm (5) nach Variante c) ein PET-Detektorsystem (1) zugeordnet ist, welches die durch Annihilation entstehenden γ-Quanten detektiert.

18. Vorrichtung nach Anspruch 17,
**dadurch gekennzeichnet,**
**dass** mindestens zwei Positronenabsorptionsschirme (5) in dem Magnetfeld (2) des Magneten angeordnet sind.

19. Vorrichtung nach Anspruch 17,
**dadurch gekennzeichnet,**
**dass** mindestens ein Positronenabsorptionsschirm (5) die Gestalt einer Maske mit Öffnungen besitzt.

## Claims

1. A method for two dimensional imaging of a positron emitter distribution in objects to be examined, whereby the object to be examined includes a positron emitter,
whereby the object (3) which is to be examined and includes the positron emitters is positioned in a magnetic field (2), **characterized in that** the positrons (4a, 4b) leaving the object (3) to be examined follow the course of the magnetic field (2) and strike a positron absorption screen (5), which is also positioned in the magnetic field (2) and which, during the interaction with the positrons (4a, 4b), makes it possible to localize the impact points (5a, 5b) of the positrons (4a, 4b) on the positron absorption screen (5).

2. The method according to claim 1,
**characterized in**
**that** a planar positron absorption screen (5) or a positron absorption screen (5) of another geometry is used, for example in shapes of a hollow body.

3. The method according to claim 1 or 2,
**characterized in**
**that** the localization of the impact point (5a, 5b) is carried out by storing the location information as a state change of the impact points (5a, 5b) of the positrons on a storage disk.

4. The method according to claim 1 or 2,
**characterized in**
**that** a spatially resolving electronic detector for the direct detection of positrons (4a, 4b) by ionization is used as positron absorption screen (5).

5. The method according to claim 1 or 2,
**characterized in**
**that** a positron absorption screen (5) is used which consists of a material which absorbs the positrons (4a, 4b) and annihilates them with one electron each, wherein two 511 keV γ quantities each arise which are registered by a PET apparatus.

6. The method according to claim 5,
**characterized in**
**that** a positron absorption screen (5) or a positron absorption plate made of aluminum, titanium, copper, gold, glass, plastic or plexiglas is used.

7. The method according to any one of claims 5 or 6,
**characterized in**
**that** at least two positron absorption screens (5) are arranged behind one another with respect to the entry plane of the positrons (4a, 4b).

8. The method according to claim 7,
**characterized in**
**that** at least one positron absorption screen (5) having the shape of a mask with openings is used.

9. The method according to any one of claims 5 to 8,
**characterized in**
**that** a positron absorption screen (5) with a thickness between 0.1 mm and 10 mm is used.

10. The method according to claim 8 or 9,
**characterized in**
**that** a superresolution method is used.

11. The method according to claim 10,
**characterized in**
**that** the object to be examined and positron absorption screen are displaced relative to each other.

12. The method according to any one of claims 1 to 11,
**characterized in**
**that** the object (3) to be examined is positioned between two positron absorption screens (5) and images are recorded from both sides of the object (3) to be examined.

13. The method according to any one of claims 1 to 12,
**characterized in**
**that** the positron absorption screen (5) is positioned in the inhomogeneous region of the magnetic field (2).

14. The method according to any one of claims 1 to 14,
**characterized in**
**that** the object (3) to be examined is positioned in the homogeneous region of the magnetic field (2).

15. A device for carrying out the method according to any one of claims 1 to 14, comprising
- a positron emitter in an object (3) to be examined,
- a positron absorber (5)
- a magnet configured to generate a magnetic field (2), wherein the positron absorber (5) is positioned in the magnetic field (2) of the magnet, the positron absorber (5) being a component from the group
a) storage disk which stores the location information about the impact points of the positrons by state change on the storage disk,
b) electronic detector,
c) positron absorption screen (5) which absorbs positrons and annihilates them with an electron each and the device is suitable to generate a two dimensional imaging of the positron emitter distribution, in accordance with the method according to any one of claims 1 to 14.

16. The device according to claim 15,
**characterized in**
**that** the storage disk in accordance with variant a) is a photoplate, a crystal matrix or a disk coated with europium atoms.

17. The device according to claim 15,
**characterized in**
**that** a PET detector system (1) is assigned to a positron absorption screen (5) in accordance with variant c) and detects the γ quantities generated by annihilation.

18. The device according to claim 17,
**characterized in**
**that** at least two positron absorption screens (5) are arranged in the magnetic field (2) of the magnet.

19. The device according to claim 17,
**characterized in**
**that** at least one positron absorption screen (5) has the shape of a mask with openings.

## Revendications

1. Procédé d'imagerie bidimensionnelle d'une distribution d'émission de positrons dans des objets à examiner, dans lequel l'objet à examiner comporte un émetteur de positrons, dans lequel
on met l'objet (3) à examiner comprenant l'émetteur de positrons en position dans un champ (2) magnétique, **caractérisé en ce que**
les positrons (4a, 4b) quittant l'objet (3) à examiner suivent la courbe du champ (2) magnétique et rencontrent un écran (5) d'absorption de positrons, qui est mis en position également dans le champ (2) magnétique et qui, par effet d'échange avec les positrons (4a, 4b), rend possible une localisation des points (5a, 5b) d'impact des positrons (4a, 4b) sur l'écran (5) d'absorption de positrons.

2. Procédé suivant la revendication 1,
**caractérisé en ce que**
l'on utilise un écran (5) d'absorption de positrons plan ou un écran (5) d'absorption de positrons d'une géométrie autre, par exemple sous la forme d'un corps creux.

3. Procédé suivant la revendication 1 ou 2,
**caractérisé en ce que**
l'on effectue la localisation du point (5a, 5b) d'impact par accumulation de l'information spatiale, comme modification d'état des points (5a, 5b) d'impact des positrons sur une plaque d'accumulation.

4. Procédé suivant la revendication 1 ou 2,
**caractérisé en ce que**
l'on utilise, comme écran (5) d'absorption de positrons, un détecteur électronique à résolution spatiale pour la détection directe de positrons (4a, 4b) par ionisation.

5. Procédé suivant la revendication 1 ou 2,
**caractérisé en ce que**
l'on utilise un écran (5) d'absorption de positrons, qui est en un matériau qui absorbe les positrons (4a, 4b) et annihile ceux-ci par respectivement un électron, dans lequel il se crée respectivement deux quanta γ à 511 keV, qui sont enregistrés par un appareil PET.

6. Procédé suivant la revendication 5,
**caractérisé en ce que**
l'on utilise un écran (5) d'absorption de positrons ou une plaque d'absorption de positrons en aluminium, titane, cuivre, or, verre, matière plastique ou plexiglas.

7. Procédé suivant l'une des revendications 5 ou 6,
**caractérisé en ce que**
l'on monte au moins deux écrans (5) d'absorption de positrons les uns derrière les autres par rapport au plan d'entrée des positrons (4a, 4b).

8. Procédé suivant la revendication 7,
**caractérisé en ce que**
l'on utilise au moins un écran (5) d'absorption de positrons, qui possède la forme d'un masque ayant des ouvertures.

9. Procédé suivant l'une des revendications 5 à 8, **caractérisé en ce que**
l'on utilise un écran (5) d'absorption de positrons d'une épaisseur comprise entre 0,1 mm et 10 mm.

10. Procédé suivant la revendication 8 ou 9,
**caractérisé en ce que**
l'on applique un procédé de super résolution.

11. Procédé suivant la revendication 10,
**caractérisé en ce que**
l'on déplace l'un par rapport à l'autre l'objet à examiner et l'écran d'absorption de positrons.

12. Procédé suivant l'une des revendications 1 à 11, **caractérisé en ce que**
l'on met l'objet (3) à examiner en position entre deux écrans (5) d'absorption de positrons et on enregistre des images de deux côtés de l'objet (3) à examiner.

13. Procédé suivant l'une des revendications 1 à 12, **caractérisé en ce que**
l'on met l'écran (5) d'absorption de positrons dans la partie inhomogène du champs (2) magnétique.

14. Procédé suivant l'une des revendications 1 à 13, **caractérisé en ce que**
l'on met l'objet (3) à examiner dans la partie homogène du champs (2) magnétique.

15. Installation pour effectuer un procédé suivant l'une des revendications 1 à 14, comprenant
- un émetteur de positrons dans un objet (3) à examiner,
- un absorbeur (5) de positrons,
- un aimant conçu pour produire un champ (2) magnétique,
dans lequel
l'absorbeur (5) de positrons est mis en position dans le champ (2) magnétique de l'aimant, l'absorbeur (5) de positrons est un élément choisi dans le groupe
a) plaque d'accumulation, qui accumule l'information spatiale sur les points d'impact des positrons par modification d'état de la plaque d'accumulation,
b) détecteur électronique,
c) écran (5) d'absorption de positrons, qui absorbe des positrons et les annihile respectivement par un électron et en ce que l'installation est propre à produire une imagerie bidimensionnelle des distributions d'émission de positrons par le procédé suivant l'une des revendications 1 à 14.

16. Installation suivant la revendication 15, **caractérisée en ce que**
la plaque d'accumulation suivant la variante a) est une plaque photographique, une matrice cristalline ou une plaque revêtue d'atomes d'europium.

17. Installation suivant la revendication 15, **caractérisée en ce qu'**
à un écran (5) d'absorption de positrons suivant la variante c), est associé un système (1) détecteur PET, qui détecte des quanta γ créés par annihilation.

18. Installation suivant la revendication 17, **caractérisée en ce que**
au moins deux écrans (5) de positrons sont disposés dans le champ (2) magnétique de l'aimant.

19. Installation suivant la revendication 17, **caractérisée en ce qu'**
au moins un écran (5) d'absorption de positrons possède la forme d'un masque ayant des ouvertures.
